# EUROPEAN PATENT SPECIFICATION

(11) **EP 0 976 688 B1**
(45) Date of publication and mention of the grant of the patent: **14.05.2003**
(21) Application number: 99114182.1
(22) Date of filing: 22.07.1999
(51) Int. Cl.: C03B 23/03, C03B 27/044

(54) **Machine particularly for curving and tempering glass plates**
Maschine, insbesondere zum Biegen und Härten von Glasscheiben
Machine, en particulier pour le bombage et la trempe de feuilles de verre

(30) Priority: 28.07.1998 IT PD980185
(43) Date of publication of application: 02.02.2000
(73) Proprietor: Ianua S.p.A, 35042 Este (IT)
(72) Inventor: Jarvinen, Jouko, 33530 Tampere (FI)
(74) Representative: Modiano, Guido, Dr.-Ing.

(56) References cited:
- EP-A- 0 261 611
- WO-A-89/01458
- WO-A-95/11202

## Description

The present invention relates to a machine particularly for curving and tempering glass plates.

The possibility has long been known to obtain curved plates starting from glass heated to the pasty state which is then inserted between articulated surfaces arranged on command according to corresponding definite curvatures.

In particular, the curving of the glass plate is achieved by making it slide with a reciprocating motion along the ideal curvilinear generatrix of said surfaces.

Currently commercially available machines produce the articulation of the surfaces by means of mechanisms which are substantially constituted by sets of linkages and actuators which are synchronized.

However, as a whole the articulation mechanisms thus constituted are particularly expensive and are not always reliable especially in the presence of intense operating loads.

The aim of the present invention is to provide a machine particularly for curving and tempering glass plates which solves the cited drawbacks of conventional machines, particularly ensuring excellent overall sturdiness while ensuring adequate functionality of the curving surfaces.

Within the scope of this aim, an important object of the present invention is to provide a machine which is structurally simple with respect to commercially available machines.

Another object of the present invention is to provide a machine which allows adequate and precise control of the production steps.

Another object of the present invention is to provide a machine whose operating and management costs are competitive with respect to conventional machines.

Another object of the present invention is to provide a machine which can be manufactured with known technologies.

This aim, these objects and others which will become apparent hereinafter are achieved by a machine particularly for curving and tempering glass plates, characterized in that it comprises, on a supporting footing with a motorized roller table for conveying the plates being treated, an articulated retractable roller conveyor whose sides are perpendicular to an advancement direction of the plates being treated, each side being formed by a catenary which is constituted by series of plate-like elements which mutually mesh by means of corresponding cogged ends and is associated with lifting actuators at its ends, said retractable roller conveyor supporting first nozzles which are rigidly coupled thereto and are connected to a forced air supply system and being associated with translatory motion actuators for the plates conveyed thereon, a liftable structure being arranged above said retractable roller conveyor, being articulated complementarily to said roller conveyor and supporting second nozzles which are connected to said forced air supply system.

Further characteristics and advantages of the present invention will become apparent from the following detailed description of an embodiment thereof, illustrated only by way of non-limitative example in the accompanying drawings, wherein:
Figure 1 is a schematic view of a machine according to the invention;
Figure 2 is an orthographic projection view of part of the machine of Figure 1;
Figures 3 and 4 are two further orthographic projection views of the machine of Figure 1;
Figure 5 is a perspective view of a detail of the machine of Figure 1;
Figure 6 is a perspective view of another detail of the machine of Figure 1;
Figure 7 is a different perspective view of the detail of Figure 5;
Figure 8 is an orthographic projection view of another detail of the machine of Figure 1;
Figure 9 is another orthographic projection view of the detail of Figure 8;
Figure 10 is a perspective view of another detail of the machine according to the invention of Figure 1;
Figure 11 is a perspective view of another detail of the machine of Figure 1.

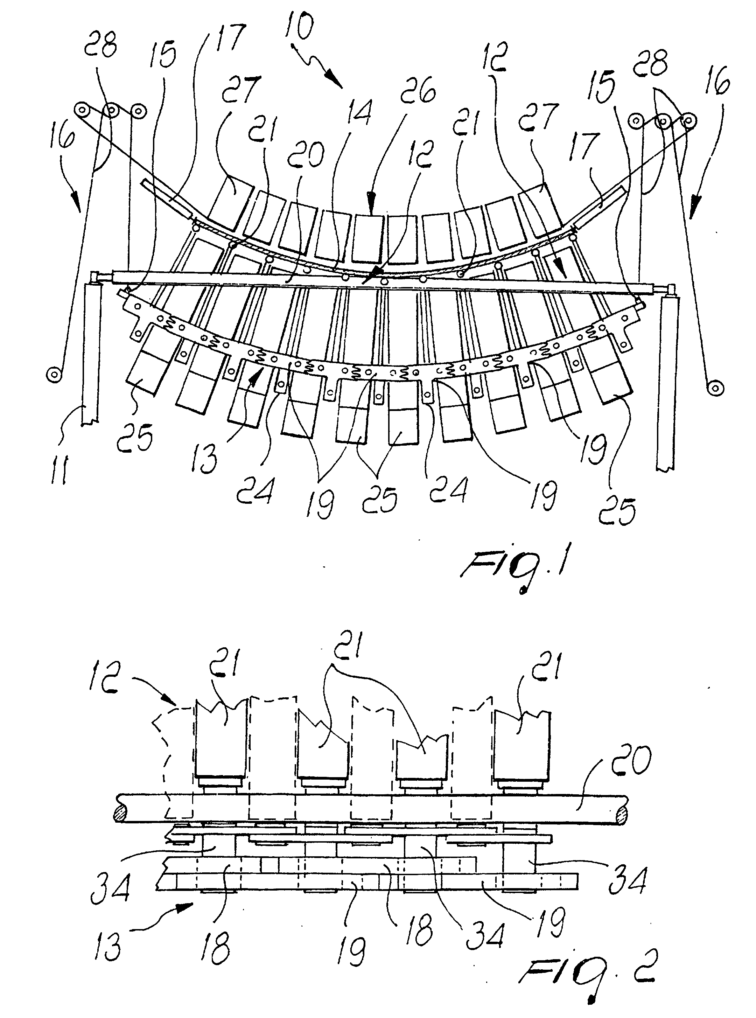

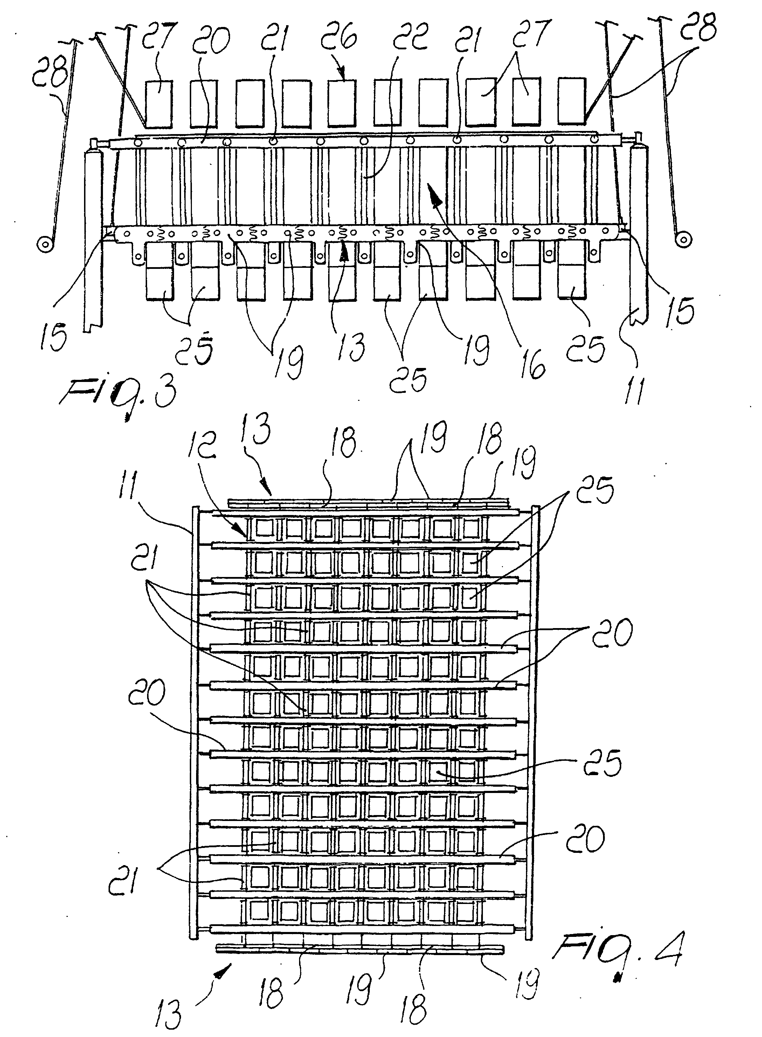

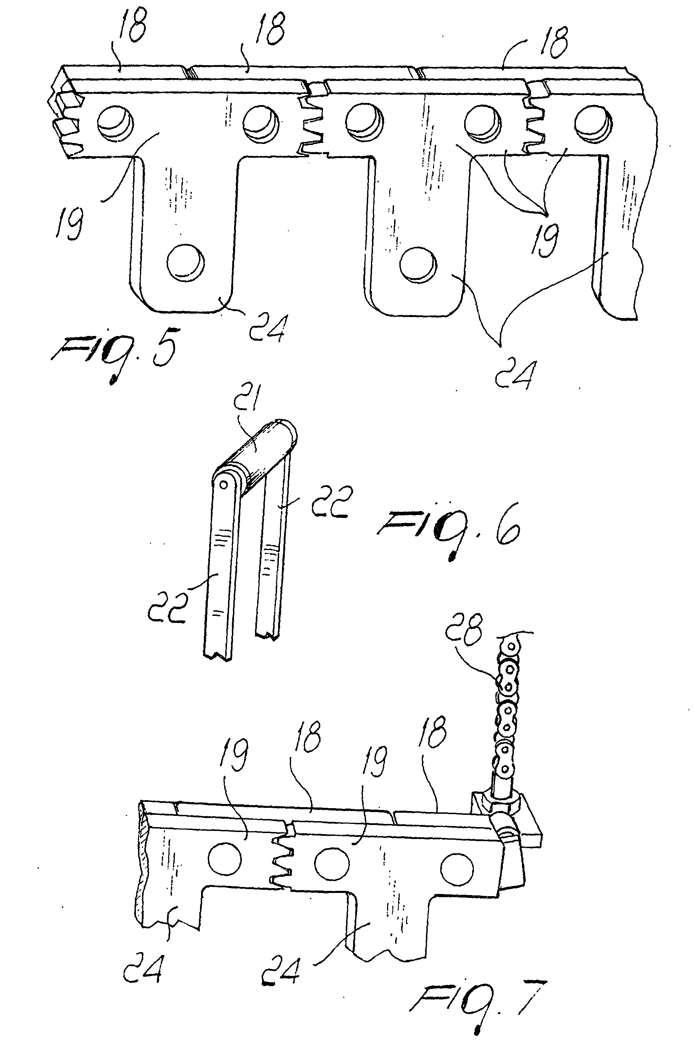

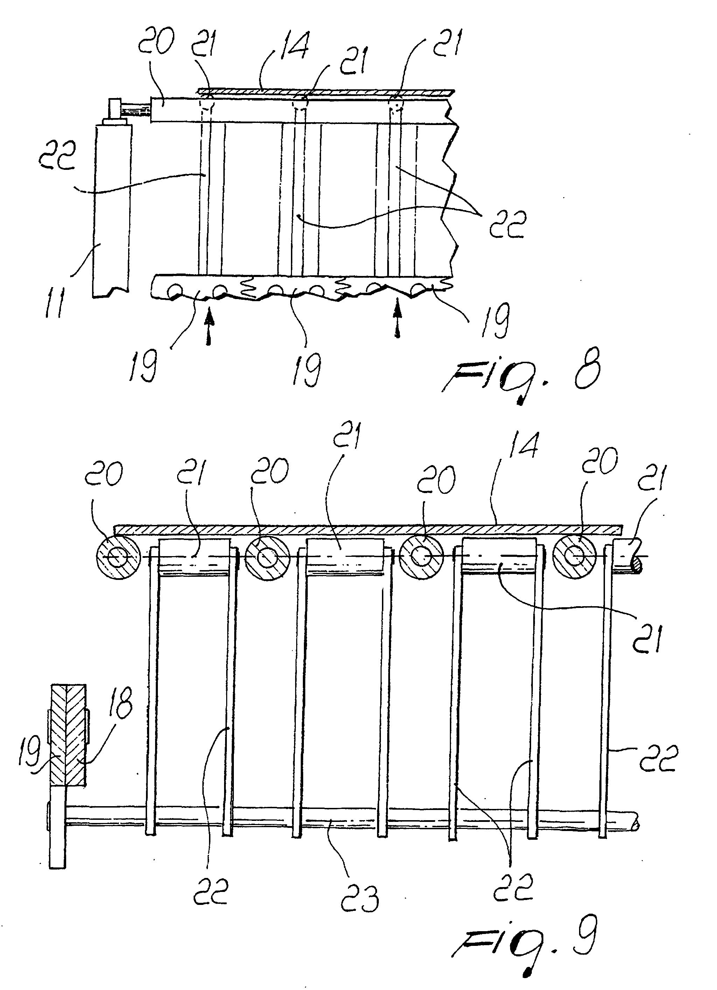

With particular reference to Figures 1 to 11, a machine particularly for curving and tempering glass plates according to the invention is generally designated by the reference numeral 10.

The machine 10 comprises, on a supporting footing 11 with a roller table for conveying the plates being treated, an articulated retractable roller conveyor 12 with sides 13 arranged at right angles to the advancement direction of glass plates 14 being treated, each side being formed by a catenary which is constituted by a series of plate-like elements which mesh with each other by means of corresponding cog-shaped ends.

The roller conveyor 12 is also associated, at its ends 15, with lifting actuators 16 and with translatory motion actuators, in this case fluid-actuated cylinders 17, for moving a plate 14 being treated.

In particular, in this embodiment each one of the catenary-shaped sides 13 has two series of side-by-side articulation elements.

The elements of a first internal one of the series of elements are designated by the reference numeral 18 and are articulated to two corresponding elements 19 of a second external one of said series and vice versa, so as to indeed form an articulated catenary which rests on footing 11 when not in use.

In this embodiment, the roller table of the footing 11 comprises a series of first motorized rollers 20 which are parallel and adapted to substantially form loading and unloading means; such rollers 20 are arranged transversely to the feeding and unloading direction of the machine 10.

The roller conveyor 12 comprises, alternated with the first rollers 20, a plurality of second rollers 21 whose axis is substantially transverse to the first rollers and which are meant for the sliding of the plates 14 during operation.

The second rollers 21 are arranged along mutually parallel coaxial directrices and are supported by sides 13.

In particular, the second rollers 21 are rotatably supported by the sides 13, by means of corresponding brackets 22 which are fixed, for each directrix of second rollers 21, to a corresponding common shaft 23 whose ends are in turn supported by corresponding tabs 24 which protrude from elements 19.

The machine 10 also comprises actuation means, not shown, for the vertical movement of the roller conveyor 12 in a flat configuration with respect to the first rollers 20.

First nozzles 25 are rigidly coupled to the roller conveyor 12 and are connected to a forced air supply system which is not shown in the figures and is of a per se known type.

The machine 10 further comprises, above the roller conveyor 12, a liftable structure 26 which is articulated complementarily thereto and is provided with second air discharge nozzles 27 which are connected to said system and with optional contrast rollers which are not shown in the figures.

The second nozzles 27 are formed by holes in pipes 31 which are fixed, at their ends, to sides formed by catenaries 32 which are constituted by elements 33 which are mutually articulated and are cradle-shaped in a downward region so as to rest on pivots 34 which protrude laterally from the sides 13 of the roller conveyor 12.

In particular in this embodiment, the actuators for lifting the ends of the roller conveyor 12 and the structure 26 are constituted by corresponding motorized chains 28.

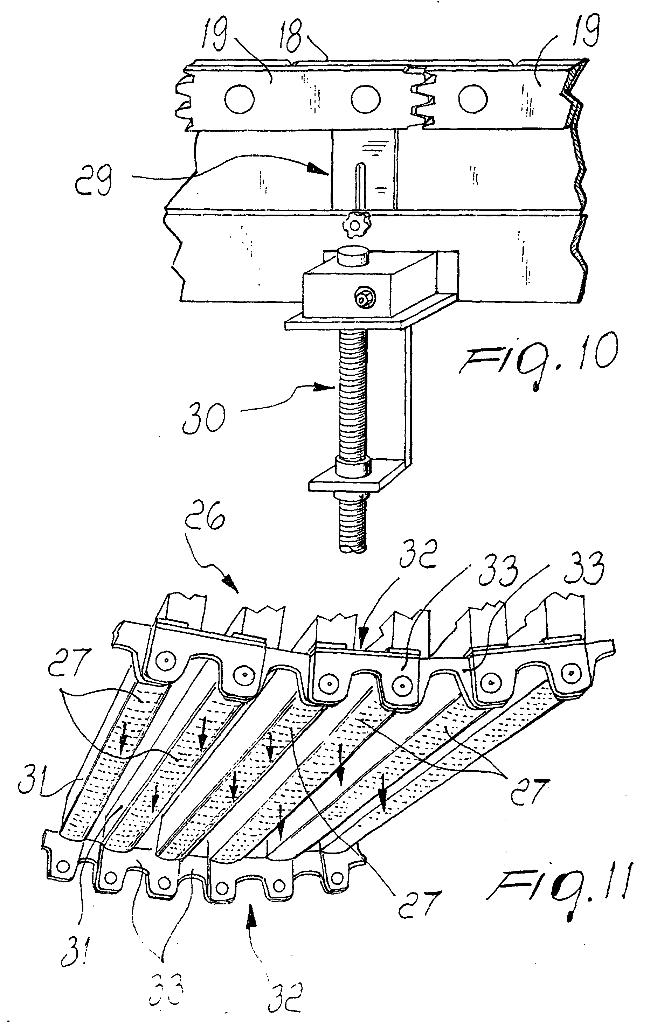

The machine 10 also comprises means for compensating the play that can form among the elements that form the catenaries, which in this case are constituted by a plurality of adjustable supporting plates 29 which are associated with corresponding mechanical movement jacks 30 (see Figure 10) and are arranged below the sides 13 in suitable positions.

As regards operation, after a glass plate 14 has been conveniently heated in an oven, it is conveyed by means of the rollers 20 onto the roller conveyor 12, which is first raised vertically until its rollers 21 replace rollers 20 in contacting the plate 14.

At this point the ends of the roller conveyor 12 are raised and the roller conveyor is arranged, through the articulation of the elements of the catenaries, so as to form a cylindrical arc.

At the same time, the plates 29 are appropriately raised so as to constitute supports for the sides 13, so as to correct any variations in the circular shape caused by plays.

The lifting of the plates 29 is automatic and regulated by an electronic control unit.

The subsequent operation consists in activating the translatory motion actuators 17, which push the plate 14 so that it slides on the roller conveyor 12, and in simultaneously sending the forced air above and below the plate 14 in order to temper it.

Then the structure 26 is raised and the roller conveyor 12 is lowered until it retracts below the rollers 20.

Finally, the plate 14 is moved away from the machine.

In practice it has been observed that the present invention has achieved the intended aim and objects.

In particular, it should be noted that the machine according to the invention, while ensuring optimum functionality, at the same time ensures high strength without however requiring excessive structural complications related to the field of plate treatment.

The presence of the catenary-shaped sides and of the lifting at the ends by means of chains in fact allows to arrange the roller conveyor in an arclike configuration without all the kinematic systems provided by the prior art.

It should also be noted that the overall sturdiness of the construction in no way impairs application flexibility and overall processing economy.

It should also be noted that the machine according to the invention can also be effectively used for a long time without substantial maintenance, also allowing to compensate for inevitable plays which form after a certain period of treatment time.

The present invention is susceptible of numerous modifications and variations, all of which are within the scope of the inventive concept.

All the details may be replaced with other technically equivalent elements.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (10) particularly for curving and tempering glass plate (14), **characterized in that** it comprises, on a supporting footing (11) with a motorized roller table for conveying the plates being treated, an articulated retractable roller conveyor (12) whose sides (13) are perpendicular to an advancement direction of the plates being treated, each side being formed by a catenary which is constituted by series of plate-like elements which mutually mesh by means of corresponding cogged ends and is associated with lifting actuators (16) at its ends (15), said retractable roller conveyor (12) supporting first nozzles (25) which are rigidly coupled thereto and are connected to a forced air supply system and being associated with translatory motion actuators (17) for the plates conveyed thereon, a liftable structure (26) being arranged above said retractable roller conveyor, being articulated complementarily to said roller conveyor and supporting second nozzles (27) which are connected to said forced air supply system.

2. The machine according to claim 1, **characterized in that** each one of said catenary-shaped sides (13) has two series of articulation elements (18,19) arranged side by side, the elements of a first one of said series being articulated to two corresponding elements of a second one of said series and vice versa, so as to form an articulated catenary which rests on said footing when not in use.

3. The machine according to claim 1, **characterized in that** the roller table of said footing (11) comprises a series of first motorized rollers (20) which are parallel and are adapted to form means for loading and unloading said plates, said first rollers (20) being arranged transversely to a feeding and unloading direction of the machine.

4. The machine according to claim 3, **characterized in that** said roller conveyor (12) comprises, alternated with said first rollers (20), a plurality of second rollers (21) whose axis is substantially transverse to said first rollers and which are meant for the operative sliding of the plates being treated, said second rollers (21) being arranged along coaxial directrices which are mutually parallel and being supported by said sides (13).

5. The machine according to claim 4, **characterized in that** said second rollers (21) are rotatably supported by said sides (13), by means of corresponding brackets (22) which are fixed, for each directrix of second rollers, to a common and corresponding shaft (23) whose ends are in turn supported by corresponding tabs (24) which protrude from said elements which belong to said corresponding second external series.

6. The machine according to claim 1, **characterized in that** it comprises actuation means for vertically moving said roller conveyor (12) with respect to said roller table.

7. The machine according to claim 1, **characterized in that** said translatory motion actuators (17) associated with said roller conveyor (12) are constituted by fluid-actuated actuators.

8. The machine according to claim 1, **characterized in that** said actuators (16) for lifting the ends of said roller conveyor (12) and the structure (26) arranged above it are constituted by corresponding motorized chains (28).

9. The machine according to one or more of the preceding claims, **characterized in that** it comprises means for compensating the play that can form between the elements that form said catenaries, said means being constituted by a plurality of adjustable supporting plates (29) which are associated with corresponding mechanical movement jacks (30) and are arranged below said sides (13) of said roller conveyor (12) in adapted positions.

10. The machine according to one or more of the preceding claims, **characterized in that** said liftable structure (26) which is articulated complementarily to said roller conveyor (12) has said nozzles (27) formed by holes in pipes (31) which are fixed, at their ends, to sides formed by catenaries (32) which are constituted by mutually articulated elements (33) which are cradle-shaped in a downward region so as to rest on pivots (34) which protrude laterally from said sides (13) of said roller conveyor (12).

11. The machine according to one or more of the preceding claims, **characterized in that** said liftable structure (26) comprises rollers for contrasting the rollers of said roller conveyor.

## Patentansprüche

1. Maschine (10), insbesondere zum Biegen und Tempern von Glasplatten (14), **dadurch gekennzeichnet, dass** sie umfasst: auf einem Trägerfuß (11) mit einem motorisierten Rollentisch zum Befördern der Platten in Behandlung, einen gelenkigen zurückziehbaren Rollenförderer (12), dessen Seiten (13) senkrecht zu einer Vorschubrichtung der Platten in Behandlung ist, wobei jede Seite von einer Kettenlinie ausgebildet ist, die von einer Reihe von plattenartigen Elementen gebildet ist, die mittels entsprechender gezahnter Enden ineinander eingreifen, und an ihren Enden (15) zugeordnete Hebebetätigungen (16) aufweist, wobei der zurückziehbare Rollenförderer (12) erste Düsen (25) trägt, die starr daran gekoppelt sind, und mit einem Umwälzluftzufuhrsystem verbunden sind und dem Translationsbewegungsbetätigungen (17) für die darauf beförderten Platten zugeordnet sind, wobei eine anhebbare Struktur (26) über dem zurückziehbaren Rollenförderer angeordnet ist, die komplementär gelenkig zum Rollenförderer ist und zweite Düsen (27) trägt, die mit dem Umwälzluftzufuhrsystem verbunden sind.

2. Maschine nach Anspruch 1, **dadurch gekennzeichnet, dass** jede der kettenförmigen Seiten (13) zwei Reihen von Gelenkelementen (18, 19) nebeneinander angeordnet aufweist, wobei die Elemente einer ersten der Reihen mit zwei entsprechenden Elementen einer zweiten der Reihen gelenkig verbunden ist und umgekehrt, so dass eine gelenkige Kettenlinie ausgebildet ist, die auf dem Fuß ruht, wenn sie nicht in Betrieb ist.

3. Maschine nach Anspruch 1, **dadurch gekennzeichnet, dass** der Rollentisch des Fußes (11) eine Reihe von ersten motorisierten Rollen (20) umfasst, die parallel sind und geeignet sind, ein Mittel zum Aufladen und Abladen der Platten auszubilden, wobei die ersten Rollen (20) quer zu einer Zufuhr- und Abladerichtung der Maschine angeordnet sind.

4. Maschine nach Anspruch 3, **dadurch gekennzeichnet, dass** der Rollenförderer (12) abwechselnd mit den ersten Rollen (20) eine Vielzahl von zweiten Rollen (21) umfasst, deren Achse im Wesentlichen quer zu den ersten Rollen ist und die zum operativen Verschieben der Platten in Behandlung gedacht sind, wobei die zweiten Rollen (21) entlang koaxialer Leitlinien angeordnet sind, die zueinander parallel sind und durch die Seiten (13) gestützt sind.

5. Maschine nach Anspruch 4, **dadurch gekennzeichnet, dass** die zweiten Rollen (21) durch die Seiten (13) mittels entsprechender Halter (22) drehbar gestützt sind, die für jede Leitlinie von zweiten Rollen an einer gemeinsamen und entsprechenden Welle (23) befestigt sind, deren Enden wiederum durch entsprechende Ansätze (24) gestützt sind, die von den Elementen hervorstehen, die zu der entsprechenden zweiten äußeren Reihe gehören.

6. Maschine nach Anspruch 1, **dadurch gekennzeichnet, dass** sie Betätigungsmittel zum vertikalen Bewegen des Rollenförderers (12) in Bezug auf den Rollentisch umfasst.

7. Maschine nach Anspruch 1, **dadurch gekennzeichnet, dass** die dem Rollenförderer (12) zugeordneten Translationsbewegungsbetätigungen (17) durch fluidbetätigte Betätigungen gebildet sind.

8. Maschine nach Anspruch 1, **dadurch gekennzeichnet, dass** die Betätigungen (16) zum Anheben der Enden des Rollenförderers (12) und die darüber angeordnete Struktur (26) durch entsprechende motorisierte Ketten (28) gebildet sind.

9. Maschine nach einem oder mehreren der vorhergehenden Ansprüche, **dadurch gekennzeichnet, dass** sie Mittel zum Kompensieren des Spiels umfasst, das sich zwischen den Elementen ausbilden kann, die die Kettenlinien bilden, wobei die Mittel durch eine Vielzahl von einstellbaren Trägerplatten (29) gebildet sind, die entsprechenden mechanischen Bewegern (30) zugeordnet und unter den Seiten (13) des Rollenförderers (12) in geeigneten Positionen angeordnet sind.

10. Maschine nach einem oder mehreren der vorhergehenden Ansprüche, **dadurch gekennzeichnet, dass** die anhebbare Struktur (26), die komplementär zum Rollenförderer (12) gelenkig ist, durch Löcher in Rohren (31) ausgebildete Düsen (27) aufweist, die an ihren Enden an durch Kettenlinien (32) ausgebildeten Seiten befestigt sind, die durch zueinander gelenkige Elemente (33) gebildet sind, die in einer unteren Region wiegenförmig sind, so das sie auf Drehpunkten (34) ruhen, die seitlich von den Seiten (13) des Rollenförderers (12) hervorstehen.

11. Maschine nach einem oder mehreren der vorhergehenden Ansprüche, **dadurch gekennzeichnet, dass** die anhebbare Struktur (26) Rollen als Gegenstück zu den Rollen des Rollenförderers umfasst.

## Revendications

1. Machine (10) en particulier pour courber et tremper des plaques en verre (14), **caractérisée en ce qu'**elle comprend, sur un pied de base (11) avec une table à rouleaux motorisée pour transporter les plaques en traitement, un convoyeur à rouleaux (12) articulé rétractable dont les côtés (13) sont perpendiculaires à une direction d'avancement des plaques en traitement, chaque côté étant formé par une chaîne qui est constituée de séries d'éléments en forme de plaques qui s'engrènent les uns dans les autres au moyen d'extrémités crantées correspondantes, et est liée à des actionnements de levage (16) à ses extrémités (15), ledit convoyeur à rouleaux rétractable (12) soutenant de premières busettes (25) qui y sont couplées de façon rigide et sont connectées à un système d'alimentation d'air forcé et étant associé à des actionnements (17) de mouvement de translation pour les plaques transportées sur ceux-ci, une structure soulevable (26) étant disposée au-dessus dudit convoyeur à rouleaux rétractable, étant articulée de façon complémentaire au dit convoyeur à rouleaux et supportant des deuxièmes busettes (27) qui sont reliées au dit système d'alimentation d'air forcé.

2. Machine selon la revendication 1, **caractérisée en ce que** chacun desdits côtés en forme de chaîne (13) possède deux séries d'éléments d'articulation (18, 19) disposées côte à côte, les éléments d'une première desdites séries étant articulés sur deux éléments correspondants d'une deuxième desdites séries et vice versa, de façon à former une chaîne articulée qui repose sur ledit pied lorsqu'elle n'est pas utilisée.

3. Machine selon la revendication 1, **caractérisée en ce que** la table à rouleaux dudit pied (11) comprend une série de premiers rouleaux motorisés (20) qui sont parallèles et sont adaptés de façon à former un moyen de chargement et de déchargement pour lesdites plaques, lesdits premiers rouleaux (20) étant disposés transversalement par rapport à une direction d'alimentation et de déchargement de la machine.

4. Machine selon la revendication 3, **caractérisée en ce que** ledit convoyeur à rouleaux (12) comprend, en alternance avec lesdits premiers rouleaux (20), une pluralité de deuxièmes rouleaux (21) dont l'axe est essentiellement transversal par rapport aux dits premiers rouleaux et qui sont destinés au coulissage opérationnel des plaques en traitement, lesdits deuxièmes rouleaux (21) étant disposés le long de directrices coaxiales qui sont parallèles les unes aux autres, et étant supportés par lesdits côtés (13).

5. Machine selon la revendication 4, **caractérisée en ce que** lesdits deuxièmes rouleaux (21) sont soutenus de façon rotative par lesdits côtés (13) au moyen de supports (22) correspondants qui sont fixés, pour chaque directrice des deuxièmes rouleaux, à un arbre (23) commun et correspondant dont les extrémités sont à leur tour soutenues par des pattes (24) correspondantes qui dépassent desdits éléments qui appartiennent à ladite deuxième série externe correspondante.

6. Machine selon la revendication 1, **caractérisée en ce qu'**elle comprend un moyen actionneur pour déplacer verticalement ledit convoyeur à rouleaux (12) par rapport à ladite table à rouleaux.

7. Machine selon la revendication 1, **caractérisée en ce que** lesdits actionneurs (17) de mouvement de translation reliés au dit convoyeur à rouleaux (12) sont constitués d'actionneurs commandés par fluide.

8. Machine selon la revendication 1, **caractérisée en ce que** lesdits actionneurs (16) pour soulever les extrémités dudit convoyeur à rouleaux (12) et la structure (26) disposée au-dessus de celui-ci sont constitués de chaînes correspondantes motorisées (28).

9. Machine selon l'une ou plusieurs quelconques des revendications précédentes, **caractérisée en ce qu'**elle comprend des moyens pour compenser le jeu qui peut se former entre les éléments qui forment lesdites chaînes, lesdits moyens étant composés d'une pluralité de plaques (24) ajustables de support qui sont reliées à des vérins (30) correspondants à mouvement mécanique et qui sont disposées en dessous desdits côtés (13) dudit convoyeur à rouleaux (12) dans des positions adaptées.

10. Machine selon l'une ou plusieurs quelconques des revendications précédentes, **caractérisée en ce que** ladite structure (26) soulevable qui est articulée de façon complémentaire sur ledit convoyeur à rouleaux (12) possède lesdits busettes (27) formées par des trous dans des tuyaux (31) qui sont fixés, par leurs extrémités, aux côtés formés par les chaînes (32) qui sont constituées d'éléments (33) articulés les uns dans les autres, qui sont en forme d'arceau vers le bas, de façon à reposer sur des pivots (34) qui dépassent latéralement desdits côtés (13) dudit convoyeur à rouleaux (12).

11. Machine selon l'une ou plusieurs quelconques des revendications précédentes **caractérisée en ce que** ladite structure soulevable (26) comprend des rouleaux pour faire contraste avec les rouleaux dudit convoyeur à rouleaux.
